# EUROPÄISCHE PATENTSCHRIFT

(11) **EP 1 294 801 B1**
(45) Veröffentlichungstag und Bekanntmachung des Hinweises auf die Patenterteilung: **14.09.2005**
(21) Anmeldenummer: 01956439.2
(22) Anmeldetag: 21.05.2001
(51) Int. Cl.: C08K 13/04

(54) **FLAMMWIDRIGE UND ANTI-ELEKTROSTATISCHE POLYCARBONAT-FORMMASSEN**
NON-INFLAMMABLE, ANTI-ELECTROSTATIC POLYCARBONATE MOLDING MATERIALS
MATIERES MOULABLES DE POLYCARBONATE ININFLAMMABLES ET ANTI-ELECTROSTATIQUES

(30) Priorität: 02.06.2000 DE 10027333
(43) Veröffentlichungstag der Anmeldung: 26.03.2003
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); ZOBEL, Michael, 50825 Köln (DE); WITTMANN, Dieter, 51375 Leverkusen (DE); DIETRICH, Manfred, 60599 Frankfurt (DE)
(86) Internationale Anmeldenummer: PCT/EP2001/005779
(87) Internationale Veröffentlichungsnummer: WO 2001/092418

(56) Entgegenhaltungen:
- EP-A- 0 286 965
- EP-A- 0 816 433
- EP-A- 0 869 149
- EP-A- 0 893 476
- EP-A- 1 125 984
- WO-A-00/00542
- WO-A-01/18117
- WO-A-01/42362
- DE-A- 3 727 250
- US-A- 563 560

## Beschreibung

Die vorliegende Erfindung betrifft schlagzähmodifizierte Polycarbonat-Formmassen mit antistatischem Verhalten, die chlor- und bromfrei flammwidrig ausgerüstet sind und sich durch gute mechanische und thermische Eigenschaften sowie eine problemlose Verarbeitbarkeit im Spritzgussverfahren auszeichnen.

Chlor- und bromfrei flammwidrig ausgerüstete, schlagzäbmodifizierte Polycarbonatformmassen sind bekannt.

EP-A 0 345 522 beschreibt Polymermischungen aus aromatischem Polycarbonat, ABS-Pfropfpolymerisat und/oder styrolhaltigem Copolymer, die mit Monophosphorsäureestern flammwidrig ausgerüstet sind.

In US-A 5,204,394 und 5,672,645 werden PC/ABS-Formmassen beschrieben, die durch Oligophosphorsäureester bzw. Mischungen aus Oligo- und Monophosphorsäureester flammwidrig ausgerüstet sind.

In JP-A 111 997 68 werden PC/ABS-Blends beschrieben, die mit monomeren und oligomeren Phosphorsäureestern flammwidrig ausgerüstet sind, wobei die Flammwidrigkeit durch Zusatz eines anorganischen Ftillstoffs, wie z.B. Talk deutlich verbessert wird.

US-A 5,849,827 beschreibt PC/ABS-Formmassen, die mit Resorcinol-basierendem Oligophosphat flammwidrig ausgerüstet sind, wobei die Nachbrennzeiten durch Zusatz nanoskaliger anorganischer Materialien in kleinen Konzentrationen deutlich reduziert werden. In WO 99/07782 werden PC/ABS-Formmassen mit einem speziellen, vom Bisphenol-A abgeleiteten Oligophosphat und synergistischen Mengen einer nanoskaligen anorganischen Verbindung beschrieben.

Die meisten Kunststoffe, so auch die in den bisher genannten Patenten bzw. Patentanmeldungen beschriebenen Formmassen, sind elektrische Isolatoren mit einem hohen elektrischen Oberflächenwiderstand. Eine bei der Materialverarbeitung, durch Kontakt mit anderen Materialien oder durch Reibung leicht entstehende elektrische Aufladung der Kunststoffoberfläche wird daher nur äußerst langsam dissipiert und führt zu vielfältigen Störungen und Belästigungen in der Praxis, insbesondere zu einer schnellen Verschmutzung und Verstaubung der Kunststoffteile unter Ausbildung unerwünschter charakteristischer Staubfiguren.

Der Oberflächenwiderstand und die Staubanziehungsneigung von Kunststoffen können reduziert werden durch Additivierung mit sogenannten Antistaüka. Als handelsübliche Additive zur anti-elektrostatischen Ausrüstung von Kunststoffen kommen beispielsweise zum Einsatz Alkyl- und Arylsulfonate, ethoxylierte Alkylamine, quartäre Ammonium- und Phosphoniumsalze sowie Fettsäureester (siehe z.B. A. Lichtblau, "Antistatika", Kunststoffe 86 (1996) 7, S. 955-958 und EP-A 0 897 950). Auch der Einsatz von speziellen Polyalkylenethern/Polyalkylenglykolen zur anti-elektrostatischen Ausrüstung von Kunststoffen ist in der Patentliteratur beschrieben.

DE-A 1297 341 offenbart beispielsweise ein Verfahren zur antistatischen Ausrüstung von Polymeren, die ausschließlich oder vorwiegend aus Kohlenstoff und Wasserstoff aufgebaut sind (insbesondere von Polyethylen), durch Oberflächenbehandlung mit oder Einarbeitung von Polyalkylenglykolen.

In FR-B-1 239 902 wird die Verwendung von Ethylen-/Propylenoxid-Dreiblockcopolymeren für die antistatische Ausrüstung von Polymeren beschrieben. Die Dreiblockcopolymeren sollen in Polymethylmethacrylat, PVC, Polyethylen, Polystyrol und ABS-Formmassen ihre antistatische Wirkung entfalten.

DE-A1-1 9817993 beschreibt ABS-Kunststoffe, die mit speziellen Dreiblockcopolymeren der Formel X-Y-X mit einem mittelständigen Block Y aus Propylenoxideinheiten und endständigen Blöcken X aus Ethylenoxideinheiten antistatisch ausgerüstet sind. Der mittlere Anteil der Ethylenoxideinheiten in diesen Dreiblockcopolymer beträgt dabei 2 bis 35 Gew.-%.

In DE-A-1 244 398 wird der Einsatz von Polypropylenglykol als Antistatikum für ABS-Harze beschrieben. Zur Erzielung eines signifikanten Effektes muss Polypropylenglykol jedoch in großen Mengen (typischerweise z.B. 5 Gew.-%) eingesetzt werden, was zu fleckigen und schmierigen Fertigteiloberflächen bis hin zu Oberflächenbelägen auf den Kunststoff-Fertigteilen und/oder im Spritzgusswerkzeug führen kann.

Auch PC/ABS-Formmassen enthaltend Polyalkylenethern/Polyalkylenglykole sind bekannt.

In EP-A-0 135 801 werden scblagzähmodifizierte Polycarbonatformmassen beschrieben, die mit 0,1 bis 3 Gew.-% bezogen auf die PC/ABS-Matrix an Dreiblockcopolymeren der Formel X-Y-X mit einem mittelständigen Block Y aus Propylenoxideinheiten und endständigen Blöcken X aus Ethylenoxideinheiten ausgerüstet sind. Der in dieser Anmeldung beschriebene Effekt der Dreiblockcopolymere ist es, das Verarbeitungsverhalten der Formmassen im Spritzgussverfahren, gekennzeichnet durch Entformungsverhalten, Fließfähigkeit und Bindenahtfestigkeit zu verbessern, ohne die mechanischen Eigenschaften des Materials zu verschlechtern.

In EP-A-0 278 348 werden PC/ABS-Formmassen beschrieben, die unter Einsatz von speziellen Polyalkylenethern antistatisch ausgerüstet sind. Die verwendeten Polyalkylenether wurden dabei durch Behandlung mit radikalbildenden Substanzen modifiziert, was ihre Effizienz als Antistatikum erhöht.

Die in den zuvor genannten Patentanmeldungen beschriebenen PC/ABS-Formmassen mit Polyalkylenethern zeichnen sich zwar durch ein anti-elektrostatisches Verhalten aus, sind aber in der beschriebenen Form nicht flammwidrig. Für viele Anwendungen ist jedoch eine Flammwidrigkeit zwingend gefordert und zusätzlich ein antistatisches Verhalten gewünscht. Eine gleichzeitige anti-elektrostatische und flammwidrige Ausrüstung von PC/ABS-Formmassen erweist sich jedoch als extrem schwierig, da die anwendbaren Antistatika im Allgemeinen gut brennbar sind und somit ihr Zusatz zu der Formmasse dessen flammwidriger Ausrüstung erschwerend entgegensteht.

In EP-A-0 979 840 werden antistatische und flammwidrige Polycarbonatformmassen enhaltend ein schlagzähmodifiziertes Polystyrol beschrieben, die mit monomeren oder oligomeren Phosphorsäureestern flammwidrig und mit speziellen Natriumdodecylbenzolsulfonaten antistatisch ausgerüstet sind. Optional können die Formmassen u.a. auch Polyalkylenglykole enthalten. Polycarbonatformmassen mit ABS werden hier nicht beschrieben. Die in EP-A-0 979 840 beschriebenen PC/HIPS-Blends erweisen sich aber im Allgemeinen im Vergleich zu PC/ABS-Blends aufgrund der schlechteren Verträglichkeit der Polymerkomponenten als problematisch hinsichtlich der Fließnahtfestigkeit und damit der Verarbeitbarkeit im Spritzgussverfahren, insbesondere bei der Herstellung aufwendig strukturierter, dünnwandiger Fertigteile, bei der zur Erzielung einer vollständigen Füllung der Spritzgussformen mehrere Angussstellen erforderlich sind.

In US-A 4,920,166 wird das Problem einer gleichzeitigen flammwidrigen und antistatischen Ausrüstung von PC/ABS dadurch gelöst, dass der Polymerformmasse einerseits mit Radikalbildnern umgesetzte Polyalkylenglykole als Antistatikum und andererseits Monophosphorsäureester als FR-Additiv und Teflon als Antitropfmittel zugesetzt werden. Optional können auch zusätzlich niedrigmolekulare organische Bromverbindungen als FR-Additiv eingesetzt werden. Die beschriebenen Formmassen haben eine für viele Anwendungen nicht ausreichende Wärmeformbeständigkeit und neigen bei der Verarbeitung im Spritzgussverfahren stark zum "Juicing", d.h. zum Ausbluten flüchtiger Formmassenbestandteile (insbesondere des FR-Additivs) und damit verbunden zur unerwünschten Belagsbildung auf der Spritzgusswerkzeugoberfläche.

Aufgabe der vorliegenden Erfindung war die Bereitstellung anti-elektrostatisch und chlor-/bromfrei flammwidrig ausgerüsteter Formmassen, die gute mechanische und thermische Eigenschaften, insbesondere hohe Wärmeformbeständigkeiten und Kerbschlagzähigkeiten besitzen und sich durch eine gute Verarbeitbarkeit im Spritzgussverfahren auszeichnen, wobei letzteres eine ausgezeichnete Fließfähigkeit (geringe Schmelzeviskosität) und eine geringe Neigung zur Belagsbildung im Werkzeug durch Ausbluten flüchtiger Formmassenbestandteile erfordert.

Es wurde nun gefunden, dass schlagzähmodifizierte Polycarbonat-Zusammensetzungen, die spezielle Polyalkylenether und halogenfreie Phosphorverbindungen mit geringer Flüchtigkeit enthalten, das geforderte Anforderungsprofil erfüllen.

Gegenstand der vorliegenden Erfindung sind somit Polycarbonat-Zusammensetzungen enthaltend
40 bis 95 Gew.-Teile aromatisches Polycarbonat, 1 bis 35 Gew.-Teile mindestens eines Pfropfpolymerisats, 1 bis 30 Gew.-Teile mindestens eines phosphorhaltigen Flammschutzmittels ausgewählt aus den Substanzgruppen der oligomeren Phosphorsäureester, Phosphazene und Phosponatamine sowie 0,1 bis 4 Gew.-Teile eines gegebenenfalls mit Radikalbildnern modifizierten Polyalkylenethers, der die Struktur eines Dreiblockcopolymers der allgemeinen Formel X-Y-X besitzt, wobei X für Polyethylenoxidblöcke und Y für einen Polypropylenoxidblock stehen und der Propylenoxidanteil bezogen auf den Polyalkylenether mindestens 60 Gew.-% beträgt.

Optional können die Formmassen weiterhin enthalten
- fluoriertes Polyolefin,
- feinteiliges anorganisches Material,
- weitere Polymerkomponenten und
- weitere handelsübliche Polymeradditive.

Bevorzugte Formmassen enthalten
A) 50 bis 90 Gew.-Teile aromatisches Polycarbonat,
B) 2 bis 25 Gew.-Teile mindestens eines Pfropfpolymerisats,
C) 2 bis 20 Gew.-Teile mindestens einer halogenfreien Phosphorverbindung ausgewählt aus den Substanzgruppen der oligomeren Phosphorsäureester, Phosphonatamine und Phosphazene,
D) 0 bis 5, vorzugsweise 0,1 bis 1, insbesondere 0,1 bis 0,5 Gew.-Teile fluoriertes Polyolefin,
E) 0 bis 50 Gew.Teile, bevorzugt 1 bis 30 Gew.-Teile, insbesondere 2 bis 25 Gew.-Teile Vinyl(co)polymerisat und/oder Polyalkylenterephthalat,
F) 0 bis 10 Gew.-Teile, bevorzugt 0 bis 5 Gew.-Teile, insbesondere 0 bis 3 Gew.-Teile feinteiliges partikel-, schuppen- oder faserförmiges anorganisches Material,
G) 0 bis 20, bevorzugt 0 bis 10, insbesondere 0 bis 5 Gew.-Teile mindestens eines handelsüblichen Polymeradditivs sowie
H) 0,5 bis 3 Gew.-Teile eines gegebenenfalls mit Radikalbildnern modifizierten Polyalkylenethers, der die Struktur eines Dreiblockcopolymers der allgemeinen Formel X-Y-X besitzt, wobei X für Polyethylenoxidblöcke und Y für einen Polypropylenoxidblock stehen und der Propylenoxidanteil bezogen auf den Polyalkylenether mindestens 60 Gew.-% beträgt.

Die Summe der Gewichtsteile aller Komponenten (A bis H sowie gegebenenfalls weiterer Bestandteile) ergibt dabei 100.

Ganz besonders bevorzugte Polycarbonat-Zusammensetzungen zeichnen sich dadurch aus, dass sie als Komponente H Polyalkylenether mit einem zahlengemittelten Molekulargewicht von ≥ 2000 g mol⁻¹, vorzugsweise von ≥ 3000 g mol⁻¹, insbesondere von ≥ 3500 g mol⁻¹ enthalten.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 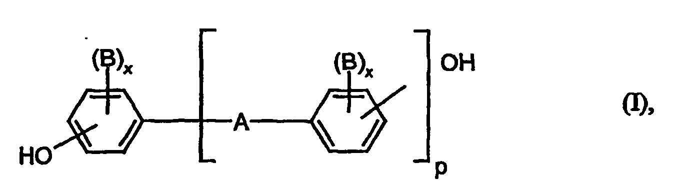 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III)

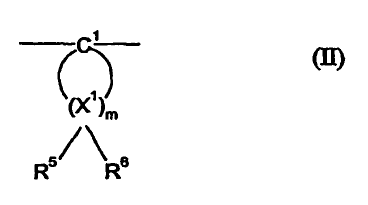

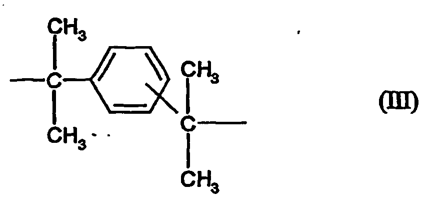

- B: jeweils C₁-C₁₂-Alkyl, vorzugsweise Methyl,
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol und p-tert.-Butylphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erhndungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxan-haltiger Copolycarbonate wird z.B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten, 2,4,4-Trimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweignngsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemischen miteinander eingesetzt werden.

### Komponente B

Die Komponente B umfasst ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise ein Gemisch aus
- B.1.1: 50 bis 99 Gew.-Teilen Vinylaromaten und/oder kemsubstituierten Vinylaromaten (wie beispielsweise und bevorzugt Styrol, α-Methylstyrol, p-Methylstyrol) und/oder Methacrylsäure-(C₁-C₈)-Alkylester (wie beispielsweise und bevorzugt Methylmethacrylat, Ethylmethacrylat) und
- B.1.2: 1 bis 50 Gew.-Teilen Vinylcyanide (ungesättigte Ntrile wie beispielsweise und bevorzugt Acrylnitril und Methacrylnitril) und/oder (Meth)Acrylsäure-(C₁-C₈)-Alkylester (wie beispielsweise und bevorzugt Methylmethacrylat, n-Butylacrylat, t-Butylacrylat) und/oder Derivate (wie beispielsweise und bevorzugt Anhydride und Imide) ungesättigter Carbonsäuren (beispielsweise und bevorzugt Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.12 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, sowie Acrylat-, Polyurethan-, Silikon-, und Ethylen/Vinylacetat-Kautschuke.

Bevorzugte Pfropfgrundlagen B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt

Besonders bevorzugt ist reiner Polybutadienkautschuk.

Besonders bevorzugte Polymerisate B sind ABS-Polymerisate (Emulsions-, Masse- und Suspensions-ABS), wie sie z.B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt im Allgemeinen mindestens 30 Gew.-%, vorzugsweise mindestens 40 Gew.-% (in Toluol gemessen).

Die Pftopfcopolymerisate B lassen sich durch radikalische Polymerisation, z.B. durch Emulsions-, Suspensions-, Lösungs- oder Massepolymerisation, vorzugsweise durch Emulsions- oder Massepolymerisation hergestellen.

Besonders bevorzugt als Komponente B ist Emulsions-ABS und Masse-ABS.

Geeignete Pfropfkautschuke sind insbesondere auch solche ABS-Polymerisate, die durch Redox-Initiierung mit einem Initiatorsystem aus organischem Hydroperoxid und Ascorbinsäure gemäß US-A 4 937 285 hergestellt werden.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vemetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

### Komponente C

Als Flammschutzmittel (C) enthalten die erfindungsgemäßen Formmassen mindestens eine halogenfreie Phosphorverbindung mit geringer Flüchtigkeit

Bevorzugt sind Phosphorverbindungen der allgemeinen Formel (IV) 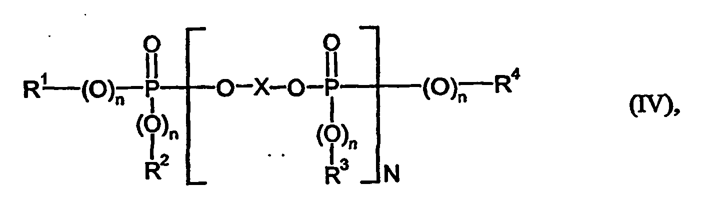 worin
- R¹, R², R³ und R⁴,: unabhängig voneinander jeweils C₁- bis C₈-Alkyl, jeweils gegebenenfalls durch Alkyl, vorzugsweise C₁-C₄-Alkyl substituiertes C₅- bis C₆-CyCloalkyl, C₆- bis C₂₀-Aryl oder C₇- bis C₁₂-Aralkyl,
- n: unabhängig voneinander, 0 oder 1
- N: eine Zahl zwischen 0,5 und 30,
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁-C₄-Alkyl substituiert sein. Besonders bevorzugte Aryl-Reste sind Kresyl, Phenyl, Xylenyl, Propylphenyl oder Butylphenyl.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab. Insbesondere steht X für

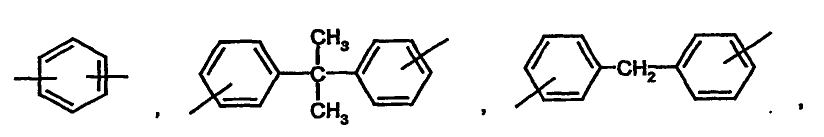

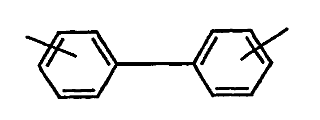

- n: in der Formel (IV) ist vorzugsweise gleich 1.
- N: kann Werte von 0,5 bis 30 annehmen, bevorzugt sind Werte von 0,5 bis 10, insbesondere von 0,7 bis 5. Als erfindungsgemäße Komponente C können auch Mischungen verschiedener Phosphate gemäß Formel (IV) eingesetzt werden. In diesem Fall kann N die oben genannten Werte als Durchschnittswerte annehmen. In den Gemischen können auch Monophosphorverbindungen (N=0) enthalten sein.

Monophosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Methylphosphonsäuredimethylester, Methylphosphensäurediphenylester, Phenylphosphonsäutediethylester, Triphenylphosphinoxid oder Trikresylphosphinoxid. Besonders bevorzugte Monophosphorverbindung ist Triphenylphosphat.

Die gemittelten N-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für N berechnet werden.

Als besonders vorteilhaft erweist sich auch der Einsatz von Phosphorverbindungen der allgemeinen Formel (V) 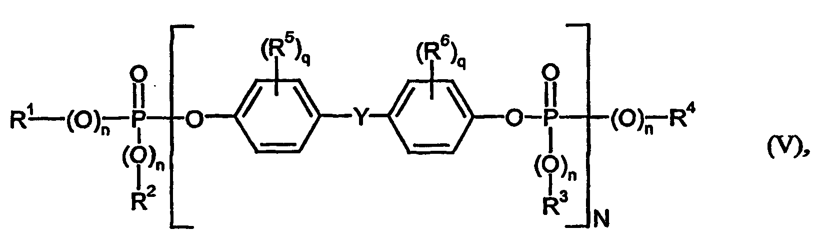 worin
- R¹, R², R³ und R⁴: jeweils unabhängig voneinander C₁-C₈-Alkyl und/oder gegebenenfalls durch Alkyl substituiertes C₅-C₆-Cycloalkyl, C₆-C₁₀-Aryl oder C₇-C₁₂-Aralkyl,
- n: unabhängig voneinander 0 oder 1, vorzugsweise 1,
- q: unabhängig voneinander 0, 1, 2, 3 oder 4, vorzugsweise 0,1 oder 2,
- N: eine Zahl zwischen 0,5 und 30, bevorzugt zwischen 0,5 und 10, insbesondere zwischen 0,7 und 5,
- R⁵ und R⁶: unabhängig voneinander C₁-C₄-Alkyl, vorzugsweise Methyl und
- Y: C₁-C₇-Alkyliden, C₁-C₇-Alkylen, C₅-C₁₂-Cycloalkylen, C₅-C₁₂-Cycloalkyliden, -O-, -S-, -SO-, SO₂ oder -CO- bedeuten.

Insbesondere bevorzugt sind solche Verbindungen der allgemeinen Formel (V), die sich vom Bisphenol-A oder desses methylsubstituierten Derivaten ableiten.

Die Phosphorverbindungen gemäß der allgemeinen Formel (IV) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Als Flammschutzkomponente (C) können auch andere halogenfreie Phosphorverbindungen mit geringer Flüchtigkeit eingesetzt werden, und zwar sowohl alleine als auch in beliebiger Mischung mit Verbindungen der allgemeinen Formel (IV). Als solche halogenfreie Phosphorverbindungen kommen insbesondere in Frage Verbindungen aus der Gruppe der Phosphazene und der Phosphonatamine.

Phosphonatamine sind Verbindungen der Formel (VI)

A_{3-y}-NB¹ _{y} (VI)

in welcher
A für einen Rest der Formel (VIa) 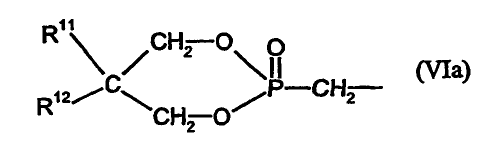 oder (VIb) 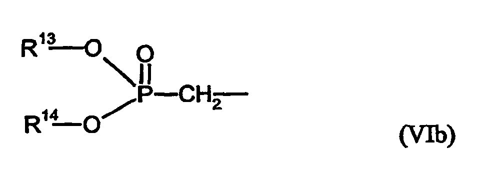 steht,
- R¹¹ und R¹²: unabhängig voneinander für C₁-C₁₀-Alkyl oder für unsubstituiertes oder substituiertes C₆-C₁₀-Aryl, stehen,
- R¹³ und R¹⁴: unabhängig voneinander für C₁-C₁₀-Alkyl oder unsubstituiertes oder substituiertes C₆-C₁₀-Aryl stehen,
- y: die Zahlenwerte 0,1 oder 2 bedeuten und
- B¹: unabhängig für Wasserstoff, C₂-C₈-Alkyl, unsubstituiertes oder substituiertes C₆-C₁₀-Aryl steht.
- B¹: steht vorzugsweise unabhängig für Wasserstoff, für Ethyl, n- oder iso-Propyl, unsubstituiertes oder durch C₁-C₄-Alkyl substituiertes C₆-C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec. oder tert. Butyl, Pentyl oder Hexyl.

C₆-C₁₀-Aryl steht in R¹¹, R¹², R¹³ und R¹⁴ unabhängig vorzugsweise für Phenyl, Naphthyl oder Binaphthyl.

Beispielhaft und vorzugsweise sei genannt das 5,5,5',5',5",5"-Hexamethyltris(1,3,2-dioxaphosphorinan-methan)amino-2,2',2"-trioxid der Formel (VIa-1) 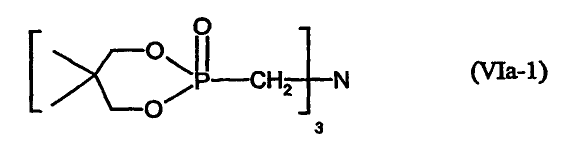 (Versuchsprodukt XPM 1000 der Fa. Solutia Inc., St. Louis, USA).

Die Herstellung der Phosphonatamine ist beispielsweise in der US-Patentschrift 5,844,028 beschrieben.

Phosphazene sind Verbindungen der Formeln (VIIa) und/oder (VIIb) 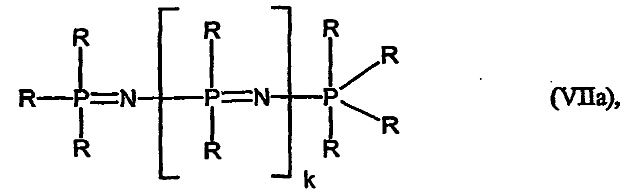 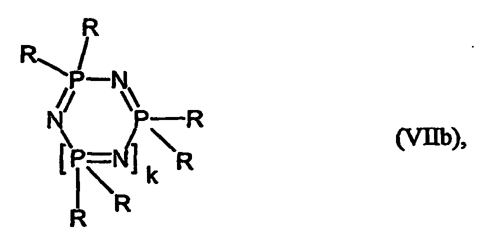 worin
- R: jeweils gleich oder verschieden ist und für C₁- bis C₈-Alkyl, oder C₁- bis C₈-Alkoxy, gegebenenfalls durch Alkyl, vorzugsweise C₁-C₄-Alkyl substituiertes C₅- bis C₆-Cycloalkyl, C₆- bis C₂₀-Aryl, vorzugsweise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

Beispielhaft und bevorzugt seien genannt:
Propoxyphosphazen, Phenoxyphosphazen und Methylphenoxyphosphazen.

Besonders bevorzugt ist Phenoxyphosphazen.

Phosphazene und deren Herstellung sind beispielsweise in EP-A 728 811, DE-A 1961668 und WO 97/40092 beschrieben.

### Komponente D

Als Komponente D können die erfindungsgemäßen Zusammensetzungen auch fluorierte Polyolefine als Antitropfmittel enthalten.

Fluorierte Polyolefine sind allgemein bekannt (vgl. z.B. EP-A 640 655). Handelsübliches Produkt ist beispielsweise Teflon® 30 N von der Firma DuPont.

Die fluorierten Polyolefine können sowohl in reiner Form als auch in Form einer koagulierten Mischung von Emulsionen der fluorierten Polyolefine mit Emulsionen der Pfropfpolymerisate (B) oder mit einer Emulsion eines Copolymerisats vorzugsweise auf Styrol/Acrylnitril-Basis eingesetzt werden, wobei das fluorierte Polyolefin als Emulsion mit einer Emulsion des Pfropfpolymerisats bzw. Copolymerisats gemischt und anschließend koaguliert wird.

Weiterhin können die fluorierten Polyolefine als Präcompound mit dem Pfropfpolymerisat (B) oder einem Copolymerisat auf vorzugsweise Styrol/Acrylnitril-Basis eingesetzt werden. Die fluorierten Polyolefine werden als Pulver mit einem Pulver oder Granulat des Pfropfpolymerisats bzw. Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und Mischungen daraus. Das Polymerisat wird nach saurer Fällung und nachfolgender Trocknung als neselfähiges Pulver eingesetzt

Die Koagulate, Präcompounds bzw. Masterbatches besitzen üblicherweise Feststoffgehalte an fluoriertem Polyolefin von 5 - 95 Gew.-%, vorzugsweise 7 bis 60 Gew.-%.

### Komponente E

Die erandungsgemäßen Zusammensetzungen können als Komponente (E) auch weitere Polymere bzw. Mischungen von Polymeren enthalten.

Geeignet sind bevorzugt Vinyl(co)Polymerisate (E.1) von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- E.1.1: 50 bis 99, vorzugsweise 60 bis 90 Gew.-Teilen Vinylammaten und/oder kernsubstituierten Vinylaromaten wie beispielsweise und bevorzugt Styrol, α-Methylstyrol, p-Methylstyrol) und/oder Methacrylsäure-(C₁-C₈)-Alkylester wie beispielsweise und bevorzugt Methylmethacrylat, Ethylmethacrylat), und
- E.1.2: 1 bis 50, vorzugsweise 10 bis 40 Gew.-Teilen Vinylcyanide (ungesättigte Nitrile) wie beispielsweise und bevorzugt Acrylnitril und Methacrylnitril und/oder (Meth)Acrylsäure-(C₁-C₈)-Alkylester (wie beispielsweise und bevorzugt Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise und bevorzugt Maleinsäureanhydrid und N-Phenyl-Maleinimid).

Die (Co)Polymerimte E.1 sind harzartig, thermoplastisch und kautschukfrei.

Besonders bevorzugt sind Copolymerisate aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente E.1 besitzen vorzugsweise Molekulargewichte M_{w} (Gewichtsmittel, ermittelt durch Lichtstreuung oder Sedimentation) zwischen 15 000 und 200 000.

Geeignet sind weiterhin Polyalkylenterephthalate (E.2) wie sie in EP-A-841 187 beschrieben sind.

Bevorzugt sind Polyalkylenterephthalate, die aus Terephthalsäure und/oder deren reaktionsfähigen Derivaten (z.B. deren Dialkylestern) und Ethylenglykol und/oder Butandiol-1,4 hergestellt worden sind, sowie auch Mischungen dieser Polyalkylenterephthalate.

### Komponente F

Desweiteren können der Polycarbonatzusammensetzung anorganische Materialien zugesetzt werden, insbesondere solche, die in kleinen Konzentrationen zu einer Verbesserung der Flammwidrigkeit der Polycarbonatformmassen führen. In Frage kommen prinzipiell alle feinvermahlenen anorganischen Materialien. Diese können z.B. partikel-, schuppen- oder faserförmigen Charakter haben. Beispielhaft seien an dieser Stelle genannt Kreide, Quarzpulver, Titandioxid, Silikate/Aluminosilikate wie z.B. Talk, Wollastonit, Glimmer/Tonschichtmineralien, Montmorillonit, insbesondere auch in einer durch Ionenaustausch modifizierten, organophilen Form, Kaolin, Zeolithe, Vermiculit sowie Aluminiumoxid, Silica, Magnesiumhydroxid, Aluminiumhydroxid und Glasfasern/Glasschuppen. Es können auch Mischungen verschiedener anorganischer Materialien zum Einsatz kommen.

Die anorganischen Materialien können oberflächenbehandelt, z.B. sitanisiert sein, um eine bessere Polymerverbräglichkeit zu gewährleisten.

Die anorganischen Materialien kommen in Konzentrationen von 0 bis 10 Gew.-%, bevorzugt von 0 bis 5 Gew.-%, insbesondere von 0 bis 3 Gew.-% bezogen auf die Gesamtzusammensetzung zum Einsatz.

Bevorzugt kommen anorganische Materialien mit schuppenförmigen Charakter zum Einsatz, wie z.B. Talk, Glimmer/Tonschichtmineralien, Montmorillonit, insbesondere auch in einer durch Ionenaustausch modifizierten, organophilen Form, Kaolin und Vermiculit.

Besonders bevorzugt ist Talk.

Unter Talk wird ein natürlich vorkommender oder synthetisch hergestellter Talk verstanden.

Reiner Talk hat die chemische Zusammensetzung 3 MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind. Auch diese verunreinigten natürlichen Talkpulver können in den erfindungsgemäßen Formmassen zum Einsatz kommen, bevorzugt sind jedoch Talktypen hoher Reinheit. Diese sind gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft ist insbesondere der Einsatz von Talk in Form von feinvermahlenen Typen mit einer mittleren größten Teilchengröße d₅₀ von <20 µm, bevorzugt <10 µm, besonders bevorzugt <5 µm, ganz besonders bevorzugt ≤2,5 µm.

Als bevorzugte anorganische Komponente seien desweiteren genannt feinstteilige (nanoskalige) anorganische Verbindungen aus einem oder mehreren Metallen der 1. bis 5. Hauptgruppe oder 1. bis 8. Nebengruppe des Periodensystems, bevorzugt aus der 2. bis 5. Hauptgruppe oder 4. bis 8. Nebengruppe, besonders bevorzugt aus der 3. bis 5. Hauptgruppe oder 4. bis 8. Nebengruppe mit den Elementen Sauerstoff, Schwefel, Bor, Phosphor, Kohlenstoff, Stickstoff, Wasserstoff und/oder Silizium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und Hydride.

Besonders bevorzugte feinstteilige anorganische Verbindungen sind beispielsweise TiN, TiO₂, SnO₂, WC, ZnO, Al₂O₃, AlO(OH), ZrO₂, SiO₂, Eisenoxide, BaSO₄, Vanadiumoxide, Zinkborat, Silikate wie Al-Silikate, Mg-Silikate. Mischungen und/oder dotierte Verbindungen können ebenfalls verwendet werden. Die nanoskaligen Partikel können mit organischen Molekülen oberflächenmodifiziert sein.

Insbesondere bevorzugt ist nanoskaliges AlO(OH).

Die durchschnittlichen Teilchendurchmesser der nanoskaligen anorganischen Materialien sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782 bis 796.

Die nanoskaligen anorganischen Verbindungen können als Pulver, Pasten, Sole, Dispersionen oder Suspensionen vorliegen. Durch Fällung können aus Dispersionen, Solen oder Suspensionen Pulver erhalten werden.

### Komponente G

Die erfindungsgemäßen Formmassen können desweiteren übliche Polymeradditive, wie z.B. von Komponente (D) verschiedene Antitropfmittel, von Komponente (C) verschiedene Flammschutzmittel, Gleit- und Entformungsmittel, Nukleiermittel, von Komponente H verschiedene Antistatika, Stabilisatoren, Farbstoffe und Pigmente sowie Füll- und Verstärkungsstoffe in einer wirksamen Konzentration enthalten.

### Komponente H

Als Antistatikum enthalten die erfindungsgemäßen Formmassen mindestens einen Polyalkylenether mit der Struktur eines Dreiblockcopolymers der allgemeinen Formel (VIII)

X - Y - X (VIII)

mit einem mittelständigen Polypropylenoxid-Block Y und endständigen Polyethylenoxidblöcken X. Der zusammengenommene Anteil der beiden endständigen Polyethylenblöcke X am Dreiblockcopolymer kann von 0 bis 40, vorzugsweise von 0 bis 30, insbesondere von 0 bis 20 Gew.-%, bezogen auf die Masse des Blockcopolymers betragen. Dementsprechend beträgt der Anteil des mittelständigen Polypropylenoxidblocks Y von 60 bis 100, bevorzugt von 70 bis 100, insbesondere von 80 bis 100 Gew.-%. Die Herstellung der Dreiblockcopolymere erfolgt in an sich bekannter Weise durch Polymerisation, wobei zunächst ein mittelständiger Polypropylenoxidblock Y hergestellt wird, an dessen beiden Enden je ein Block aus Ethylenoxideinheiten angelagert wird (siehe z.B. N. Schönfeld, Grenzflächenaktive Ethylenoxid-Addukte, Wissenschaftliche Verlagsgesellschaft mbH, Stuttgart, 1976, Seiten 53 ff.). Bevorzugte Dreiblockcopolymere und deren Herstellung sind auch in EP-A-0 135 801 und EP-A-0 018 591 beschrieben.

Als Comonomer-Einheiten können die Polyalkylenether zusätzlich einpolymerisiert enthalten: Diole und höherwertige Alkohole, z.B. Glycerin, Neopentylglykol, Butandiol, und/oder aromatische Diphenole wie sie bei Formel (I) beschrieben sind, z.B. Bisphenol A, Resorcin, Hydrochinon.

Die als Komponente (H) eingesetzten Polyalkylenether können zur Verstärkung ihrer antistatischen Wirkung auch gemäß dem in EP-A-0 278 348 und US-A 4,920,166 beschriebenen Verfahren mit Radikalbildnern umgesetzt werden. Als radikalbildende Substanzen kommen die als Initiatoren für die radikalische Polymerisation bekannten, handelsüblichen Verbindungen sowie alle sonstigen Verbindungen in Frage, die bei Temperaturen zwischen 20 und 200°C ausreichend schnell unter Bildung von Radikalen zerfallen. So kann man beispielsweise Diacylperoxide wie Dibenzoylperoxid, substituierte Dibenzoylperoxide und Dilauroylperoxid, Acylsulfonylperoxide wie Acetylcyclohexansulfonylperoxid, Peroxydicarbonate wie Dicyclohexyl- und Di-tert.-butylperoxydicarbonat, Acylperester wie tert.-Butylperpivalat und tert.-Butylperbenzoat, Dialkylperoxide wie Dicumyl- und Di-tert.-butylperoxid, Hydroperoxide wie Cumylhydroperoxid und tert.-Butylhydroperoxid und andere Peroxyverbindungen sowie aliphatische und araliphatische Azoverbindungen einsetzen. Bevorzugte Radikalbildner zerfallen ausreichend schnell bei Temperaturen von 60 bis 140°C, z.B. Azodiisobutyronitril, Di-tert-butylperoxid, Dibenzoylperoxid, tert.-Butylperbenzoat, Dicumylperoxid und 1,3-Bis-(tert.-butylperoxyisopropyl)benzol. Besonders bevorzugt wird Dibenzoylperoxid verwendet.

Die erfindungsgemäßen, durch Umsetzung mit Radikalbildnern modifizierten Polyalkylenether kann man durch einfaches Rühren des Radikalbildners mit dem jeweiligen Poylalkylenether bei Temperaturen zwischen 50 und 150°C herstellen. Die dabei eingesetzte Menge der Radikalbildner bezogen auf die Menge an Polyalkylenether beträgt 0,05 bis 5 Gew.-%, bevorzugt 0,1 bis 2,0 Gew.-% und besonders bevorzugt 0,25 bis 1,0 Gew.-%.

Aufgrund ihrer geringeren Weichmacherwirkung und ihrer geringeren Flüchtigkeit, nicht aber aufgrund ihrer höheren Effizienz als Antistatikum kommen bevorzugt solche Polyalkylenether mit einem zahlengemittelten Molekulargewicht von ≥2000 g mol⁻¹, vorzugsweise von ≥ 3000 g mol⁻¹, insbesondere von ≥ 3500 g mol⁻¹ zum Einsatz.

Die erfindungsgemäßen Formmassen enthaltend die Komponenten A bis H und gegebenenfalls weitere Zusätze, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammwidrigkeit, ihrer guten mechanischen und thermischen Eigenschaften sowie aufgrund ihres guten Verarbeitungsverhaltens zur Herstellung von Formkörpern jeglicher Art. Die Formkörper können prinzipiell nach allen bekannten Verfahren hergestellt werden, z.B. durch Spritzguss und Extrusion. Bevorzugt eignen sich die Formmassen zur Herstellung von Formkörpern im Spritzgussverfahren.

Bevorzugte Beispiele für herstellbare Formkörper sind: Gehäuseteile jeder Art, z.B. für Haushaltsgeräte wie Saftpressen, Kaffeemaschinen, Mixer; für Elektromotoren wie in Rasenmähern, Bohrmaschinen, etc. sowie für Büromaschinen, wie Monitore, (tragbare) Computer, Drucker und Kopierer. Weitere mögliche Einsatzgebiete sind Formteile, Extrusionsprofile oder Platten für den Kfz-/Schienenfahrzeug-/Flugzeug-Sektor (z.B. Innenverkleidungen). Die Formmassen sind auch für Anwendungen in der Elektrotechnik z.B. für Schalter, Steckdosen und Platinen sowie für Verteiler- und Stromzählerkästen einsetzbar.

Gegenstand der Erfindung sind ebenfalls Verfahren zur Herstellung der erfindungsgemäßen Formmassen, ihre Verwendung zur Herstellung von Formkörpern jeglicher Art sowie diese Formkörper selbst.

### Beispiele

### Komponente A.1

Polycarbonat auf Basis Bisphenol A mit einer relativen Lösungsviskosität von 1,25 gemessen in Methylenchlorid bei 25°C und in einer Konzentration von 0,5 g/100 ml.

### Komponente A.2

Polycarbonat auf Basis Bisphenol A mit einer relativen Lösungsviskosität von 1,24 gemessen in Methylenchlorid bei 25°C und in einer Konzentration von 0,5 g/100 ml.

### Komponente B

Pfropfpolymerisat, hergestellt durch Emulsionspolymerisation von 45 Gew.-Teilen Styrol und Acrylnitril im Masse-Verhältnis von 72:28 auf 55 Gew.-Teilen eines teilchenförmigen vernetzten Polybutadienkautschuks (mittlerer Teilchendurchmesser d₅₀ = 0,3 bis 0,4 µm).

### Komponente C.1

Resorcinol-basierendes Oligophosphat

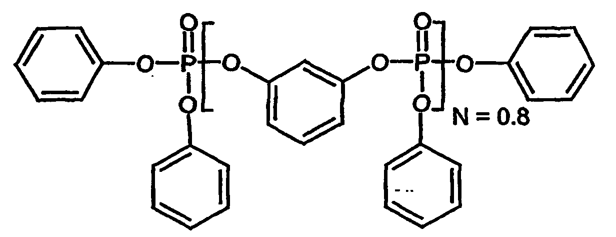

### Komponente C.2

Bisphenol-A-basierendes Oligophosphat

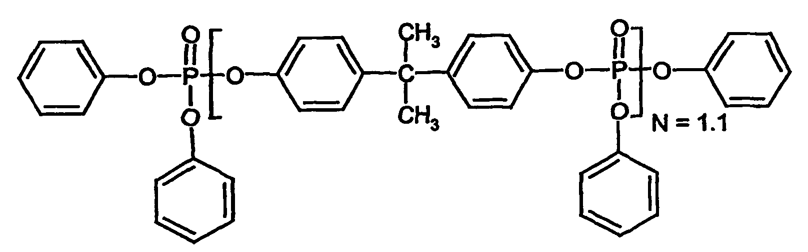

Zur Bestimmung der angegebenen zahlengemittelten N-Werte der Komponenten C.1 und C.2 wurden zuerst die Anteile der oligomeren Phosphate durch HPLC-Messungen bestimmt:

| | |
|---|---|
| Säulentyp | LiChrosorp RP-8 |
| Elutionsmittel im Gradienten | Acetonitril/Wasser 50:50 bis 100:0 |
| Konzentration | 5 mg/ml |

Aus den Anteilen der einzelnen Komponenten (Mono- und Oligophosphate) wurden dann nach bekannten Verfahren die zahlengewichteten N-Mittelwerte berechnet.

### Komponente D

Das hier verwendete Polytetrafluorethylen-Präparat (D) wird hergestellt durch Cofällung einer Mischung wässriger Emulsionen des Pfropfpolymerisats (B) und eines Tetrafluorethylenpolymerisats. Das Gewichtsverhältnis Pfropfpolymerisat (B) zum Tetrafluorethylenpolymerisat im Koagulat ist 90 Gew.-% zu 10 Gew.-%. Die Tetrafluorethylenpolymerisat-Emulsion besitzt einen Feststoffgehalt von 60 Gew.-%, der mittlere PTFE-Teilchendurchmesser liegt zwischen 0,05 und 0,5µm. Die Pfropfpolymerisat-Emulsion besitzt einen Feststoffgehalt von 34 Gew.-% und einen mittleren Latexteilchendurchmesser von 0,3 bis 0,4 µm.

Zur Herstellung von (D) wird die Emulsion des Tetrafluorethylenpolymerisats (Teflon 30 N der Fa. DuPont) mit der Emulsion des Pfropfpolymerisats (B) vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente E

Styrol/Acrylnitril-Copolymerisat mit einem Styrol/Acrylnitril-Massenverhältnis von 72:28 und einer Grenzviskosität von 0,55 dl/g (Messung in Dimethylformamid bei 20°C).

### Komponente F.1

Pural 200: nanoskaliges AlO(OH) mit Böhmitstruktur der Firma Condea Chemie GmbH (Hamburg, Deutschland).

### Komponente F.2

Naintsch A3: Feinstvermahlener hochreiner Talk der Firma Naintsch Mineralwerke GmbH (Graz, Österreich).

### Komponente G.1

Phosphitstabilisator

### Komponente G.2

Pentaerythrittetrastearat als Entformungsmittel

### Komponente H.1

Blockcopolymer mit der Struktur X-(XY)-Y-(XY)-X mit einem mittelständigen Polypropylenoxidblock Y, daran angrenzenden statistisch gemischten Propylenoxid/Ethylenoxidblöcken (XY) und endständigen Polyethylenoxidblöcken X. Der Propylenoxidgehalt des Blockcopolymers ist 51 Gew.-%; das zahlengemittelte Molekulargewicht beträgt ca. 2000 g mol⁻¹ (OH-Zahl = 58).

### Komponente H.2

Dreiblockcopolymer mit der Struktur X-Y-X mit einem mittelständigen Polypropylenoxidblock Y und endständigen Polyethylenoxidblöcken X. Der Propylenoxidgehalt des Blockcopolymers ist 70,3 Gew.-%; das zahlengemittelte Molekulargewicht beträgt ca. 4000 g mol⁻¹ (OH-Zahl = 29).

### Komponente H.3

Dreiblockcopolymer mit der Struktur X-Y-X mit einem mittelständigen Polypropylenoxidblock Y und endständigen Polyethylenoxidblöcken X. Der Propylenoxidgehalt des Blockcopolymers ist 86,7 Gew.-%; das zahlengemittelte Molekulargewicht beträgt ca. 4000 g mol⁻¹ (OH-Zahl = 27).

### Herstellung und Prüfung der erfindungsgemäßen Formmassen

Das Mischen der Komponenten A bis H erfolgte mit einem 31-Innenkneter bzw. im Falle der Beispiele 8-10 und des Vergleichsbeispiels V6 mit einem Laborextruder (ZSK 25, Werner & Pfleiderer) bei einer Massetemperatur von 240°C, einem Durchsatz von 15 kg/h und einer Schneckenrotationsfrequenz von 200 U/min. Die Formkörper wurden auf einer Spritzgießmaschine (Typ Arburg 270E) bei 240°C hergestellt.

Die Kerbschlagzähigkeit (aₖ) wird bei Raumtemperatur gemäß ISO 180-1A bestimmt.

Die Vicat B 120-Temperatur wird gemäß ISO 306 mit einer Aufheizrate von 120 K/h und einer Stempellast von 50 N bestimmt.

Die Flammwidrigkeit wird gemäß UL94V beurteilt an Stäben mit einer Dicke von 1,6 mm. Ein flammwidriges Material im Sinne der vorliegenden Erfindung liegt vor, wenn der UL94V-Test bei 1,6 mm Wandstärke mit dem Urteil V-0 oder V-1 bestanden wird.

Die Schmelzeviskosität als Mass für die Fließfähigkeit bei der Verarbeitung im Spritzgussverfahren wird bestimmt gemäß DIN 54811 bei 260°C und bei einer Scherrate von 1000 s⁻¹.

Der MVR wird bestimmt gemäß ISO 1133 bei 240°C unter Verwendung einer Stempellast von 5 kg.

Die Juicing-Neigung des Kunststoffs beim Spritzguss wird anhand der Ergebnisse einer TGA-Untersuchung beurteilt. Ca. 2,5 mg der wie oben beschrieben compoundierten Formmassen werden hierzu im Stickstoffstrom (50 ml/min) dynamisch mit einer Rate von 10 K/min ausgehend von Raumtemperatur aufgeheizt. Der prozentuale Massenverlust, der bei einer erreichten Temperatur von 280 °C bestimmt wird, dient als Maß für die Ausblutneigung flüchtiger Formmassenbestandteile.

Das antistatische Verhalten der Materialien wird anhand eines Staubanziehungstestes beurteilt. Hierzu werden Rundplatten mit einem Durchmesser von 80 mm und einer Dicke von 2 mm unter Verwendung eines oberflächenpolierten Spritzgusswerkzeuges abgespritzt und unmittelbar danach einzeln in Tüten aus Pergaminpapier verpackt. Zwischen Spritzguss und Ausprüfung liegt eine Zeitspanne von mindestens einer Woche. Beim Test 1 wird die Rundplatte aus der Papiertüte entnommen. Durch die dabei auftretende Reibung wird die Kunststoffoberfläche elektrisch aufgeladen. Die Rundplatte wird unmittelbar nach der Entnahme aus der Tüte für 10 s in eine Aktivkohlenstaub enthaltende Luftatmosphere gehalten und danach visuell beurteilt. Beim Test 2 wird die Rundplatte nach der Entnahme aus der Papiertüte und vor der Bestäubung gemäß dem zuvor beschriebenen Verfahren zunächst für 24 h bei 23°C und bei einer relativen Luftfeuchtigkeit von 80 % konditioniert. Die Aktivkohlenstaubatmosphere wird in definierter Weise eingestellt, indem in einem 3 1-Becherglas, das etwa 50 g Aktivkohlenstaub (Riedel de Haen, Seelze, Deutschland) und einen magnetischen Rührkern geeigneter Geometrie enthält, der Staub mit einem Magnetrührer aufgewirbelt wird. Beurteilt wird jeweils zum einen sowohl visuell als auch gravimetrisch die Menge des niedergeschlagenen Kohlenstaubes sowie zum anderen visuell das Auftreten besonders unerwünschter, ungleichmäßiger Staubverteilungsmuster ("Staubfiguren"). Die visuelle Beurteilung wurde jeweils von vier unabhängigen Personen durchgeführt, ohne dass diesen die Zuordnung der Platten zu den konkreten Materialien bekannt war. In allen Fällen kam es zu einheitlichen Bewertungen bei allen beurteilenden Personen. Ein Material wird im Sinne der vorliegenden Erfindung als anti-elektrostatisch eingestuft, wenn es im Test 2 eine nur geringe oder sehr geringe Staubanziehung aufweist und keine Staubfiguren zeigt.

**Tabelle 1**

| Zusammensetzungen und Eigenschaften | | | | | |
|---|---|---|---|---|---|
| **Beispiel/ Komponenten** | | **V1*** | **V2*** | **1** | **2** |
| **A.1** | Polycarbonat | 68,4 | 68,4 | 68,4 | 68,4 |
| **B** | Pfropfpolymerisat | 6,8 | 6,8 | 6,8 | 6,8 |
| **C.1** | RDP | 10,8 | 10,8 | 10,8 | 10,8 |
| **D** | PTFE-Präparat (10 % PTFE) | 4,2 | 4,2 | 4,2 | 4,2 |
| **E** | SAN | 9,3 | 9,3 | 9,3 | 9,3 |
| **G.1** | Stabilisator | 0,1 | 0,1 | 0,1 | 0,1 |
| **G.2** | Entformungsmittel | 0,4 | 0,4 | 0,4 | 0,4 |
| **H.1** | Antistatikum (M = 2000 g mol⁻¹, PO = 51 %) | - | 2,0 | - | - |
| **H.2** | Antistatikum (M = 4000 g mol⁻¹, PO = 70,3 %) | - | - | 2,0 | - |
| **H.3** | Antistatikum (M = 4000 g mol⁻¹, PO = 86,7 %) | - | - | - | 2,0 |
| **Eigenschaften** | | | | | |
| Vicat B 120 | [°C] | 95 | 87 | 90 | 94 |
| MVR [240°C/5kg] | [ml/10min] | 25 | 38 | 37 | 37 |
| Antistatikverhalten | Staubanziehungsneigung | stark | stark | gering | sehr gering |
| (Test 2) | Staubfiguren | ja | ja | nein | nein |

| | | | | | |
|---|---|---|---|---|---|
| * Vergleichsversuch | | | | | |

**Tabelle 2**

| Zusammensetzungen und Eigenschaften | | | | | | |
|---|---|---|---|---|---|---|
| **Beispiel/ Komponenten** | | **V3*** | **3** | **4** | **5** | **V4*** |
| **A.1** | Polycarbonat | 68,4 | 68,4 | 68,4 | 68,4 | 68,4 |
| **B** | Pfropfpolymerisat | 6,8 | 6,8 | 6,8 | 6,8 | 6,8 |
| **C.1** | RDP | 10,8 | 10,8 | 10,8 | 10,8 | 10,8 |
| **D** | PTFE-Präparat (10 % PTFE) | 4,2 | 4,2 | 4,2 | 4,2 | 4,2 |
| **E** | SAN | 9,3 | 9,3 | 9,3 | 9,3 | 9,3 |
| **F.1** | nanoskaliges AIO(OH) | - | - | 0,7 | 0,7 | 0,7 |
| **G.1** | Stabilisator | 0,1 | 0,1 | 0,1 | 0,1 | 0,1 |
| **G.2** | Entformungsmittel | 0,4 | 0,4 | 0,4 | 0,4 | 0,4 |
| **H.3** | Antistatikum (M = 4000 g mol⁻¹, PO = 86,7 %) | - | 3,0 | 2,0 | 3,0 | 4,0 |
| **Eigenschaften** | | | | | | |
| Vicat B 120 | [°C] | 94 | 92 | 92 | 92 | 91 |
| Viskosität [260°C/100 0s⁻¹] | [Pa s] | 151 | 130 | 138 | 131 | 96 |
| aₖ (23°C) | [kJ/m²] | 41 | 40 | 45 | 43 | 41 |
| UL94 - Brandtest | Bewertung bei 1,6 mm | V-0 | V-1 | V-1 | V-1 | NB |
| Juicing-Neigung | Masseverlust bei 280°C [%] | 1,28 | 1,27 | | | |
| Antistatikverhalten | Staubanziehungsneigung | stark | sehr gering | gering | gering | sehr gering |
| (Test 1) | Staubfiguren | ja | nein | nein | nein | nein |
| Antistatikverhalten | Staubanziehungsneigung | stark | sehr gering | sehr gering | sehr gering | sehr gering |
| (Test 2) | Staubfiguren | ja | nein | nein | nein | nein |

| | | | | | | |
|---|---|---|---|---|---|---|
| * Vergleichsversuch | | | | | | |

**Tabelle 3**

| Zusammensetzungen und Eigenschaften | | | | | |
|---|---|---|---|---|---|
| **Beispiel/ Komponenten** | | **V5*** | **6** | **7** | **8** |
| **A.2** | Polycarbonat | 65,3 | 65,3 | 65,3 | 65,3 |
| **B** | Pfropfpolymerisat | 7,0 | 7,0 | 7,0 | 7,0 |
| **C.2** | BDP | 14,6 | 14,6 | 14,6 | 14,6 |
| **D** | PTFE-Präparat (10 % PTFE) | 4,6 | 4,6 | 4,6 | 4,6 |
| **E** | SAN | 6,0 | 6,0 | 6,0 | 6,0 |
| **F.2** | Talk | 2,0 | 2,0 | 2,0 | 2,0 |
| **G.1** | Stabilisator | 0,1 | 0,1 | 0,1 | 0,1 |
| **G.2** | Entformungsmittel | 0,4 | 0,4 | 0,4 | 0,4 |
| **H.3** | Antistatikum (M = 4000 g mol⁻¹, PO = 86,7 %) | - | 1,5 | 3,0 | 4,5 |
| **Eigenschaften** | | | | | |
| Vicat B 120 | [°C] | 95 | 93 | 92 | 90 |
| Viskosität [260°C/1000s⁻¹] | [Pa s] | 155 | 139 | 115 | 78 |
| aₖ (23°C) | [kJ/m²] | 18 | 24 | 22 | 20 |
| UL94 -Brandtest | Bewertung bei 1,6 mm | V-0 | V-0 | V-0 | V-1 |
| Antistatikverhalten | Staubanziehungsneigung | stark | stark | sehr gering | sehr gering |
| (Test 1) | Staubfiguren | ja | ja | nein | nein |
| Antistatikverhalten 2) | Staubanziehungsneigung | stark | gering | sehr gering | sehr gering |
| (Test 2) | Staubfiguren | ja | nein | nein | nein |

| | | | | | |
|---|---|---|---|---|---|
| * Vergleichsversuch | | | | | |

Aus Tabelle 1 geht hervor, dass sich durch Zusatz von erfindungsgemäßen Polyalkylenethern auf der Basis von Propylenoxid und Ethylenoxid zu halogenfrei flammwidrig ausgerüsteten PC/ABS-Blends die Staubanziehungsneigung des Kunststoffs deutlich reduzieren läßt (vergleiche Vergleichsbeispiel V1 mit Beispielen 1-2). Mit zunehmendem Propylenoxidanteil nimmt bei gleicher Molekularmasse die antistatische Wirkung der Polyalkylenether zu (vergleiche Beispiele 1 und 2 sowie Vergleichspiel V2). Ein Polyalkylenether auf Basis Ethylen- und Propylenoxid mit einem Propylenoxid-Gehalt von nur 51 % (Vergleichsbeispiel 2) ist offenbar nicht geeignet, das Staubanziehungsverhalten des flammwidrigen PC/ABS-Blends signifikant zu verbessern. Als Polyalkylenether eignen sich solche Polymere, die auf Polypropylenoxid- und Polyethylenoxidblöcken basieren und die Struktur eines Dreiblockcopolymers der allgemeinen Formel X-Y-X besitzen, wobei X für Polyethylenoxidblöcke und Y für einen Polypropylenoxidblock stehen (Beispiele 1 und 2). Alle genannten Polyalkylenether führen zu einer Verbesserung der Fließfähgikeit des Kunststoffs und damit zu einer verbesserten Verarbeitbarkeit des Materials im Spritzgussverfahren. Der Einsatz von Polyalkylenethern, die sich durch ein hohes Molekulargewicht (z.B. in Höhe von 4000 g mol⁻¹) auszeichnen, erweist sich aufgrund der höheren Wärmeformbeständigkeit und der geringeren Juicing-Neigung (Tabelle 2) der mit ihnen anti-elektrostatisch ausgerüsteten Blends als vorteilhaft. Insbesondere erweist sich auch ein hoher Propylenoxidanteil des eingesetzten Polylakylenethers als vorteilhaft im Hinblick auf die Wärmeformbeständigkeit des antistatisch ausgerüsteten Blends (vgl. Beispiele 1 und 2).

Tabellen 2 und 3 zeigen, dass sich der Zusatz der als Antistatikum geeigneten Polyalkylenether nicht negativ auf die mechanischen Eigenschaften wie die Kerbschlagzähigkeit auswirkt.

Bei sehr hohen Konzentrationen des Polyalkylenethers (z.B. ≥ 4 bis 5 Gew.-%) wird zwar ein ausgezeichnetes Antistatikverhalten beobachtet, allerdings lässt sich eine ausreichende Flammwidrigkeit und Wärmeformbeständigkeit unter diesen Umständen oft (in Abhängigkeit von der jeweiligen Gesamtrezeptur) nicht mehr realisieren (Vergleichsbeispiel V4).

## Patentansprüche

1. Zusammensetzungen enthaltend 40 bis 95 Gew.-Teile aromatisches Polycarbonat, 1 bis 35 Gew.-Teile mindestens eines Pfropfpolymerisats, 1 bis 30 Gew.-Teile mindestens eines phosphorhaltigen Flammschutzmittels ausgewählt aus den Substanzgruppen der oligomeren Phosphorsäureester, Phosphazene und Phosponatamine sowie 0,1 bis 4 Gew.-Teile eines gegebenenfalls mit Radikalbildnern modifizierten Polyallcylenethers, der die Struktur eines Dreiblockcopolymers der allgemeinen Formel X-Y-X besitzt, wobei X für Polyethylenoxidblöcke und Y für einen Polypropylenoxidblock stehen und der Propylenoxidanteil bezogen auf den Polyalkylenether mindestens 60 Gew.-% beträgt.

2. Zusammensetzungen gemäß Anspruch 1 enthaltend 50 bis 90 Gew.-Teile aromatisches Polycarbonat, 2 bis 25 Gew.-Teile mindestens eines Pfropfpolymerisats, 2 bis 20 Gew.-Teile mindestens eines phosphorhaltigen Flammschutzmittels ausgewählt aus den Substanzgruppen der oligomeren Phosphorsäureester, Phosphazene und Phosponatamine sowie 0,5 bis 3 Gew.-% eines gegebenenfalls mit Radikalbildnern modifizierten Polyalkylenethers, der die Struktur eines Dreiblockcopolymers der allgemeinen Formel X-Y-X besitzt, wobei X für Polyethylenoxidblöcke und Y für einen Polypropylenoxidblock stehen und der Propylenoxidanteil bezogen auf den Polyalkylenether mindestens 60 Gew.-% beträgt.

3. Zusammensetzungen gemäß einem oder mehreren der vorhergehenden Ansprüche enthaltend zusätzlich fluoriertes Polyolefin, gegebenenfalls als Koagulat, Präcompound oder Masterbatch mit einem Pfropfpolymerisat oder einem Vinyl(co)polymerisat.

4. Zusammensetzungen gemäß einem oder mehreren der vorhergehenden Ansprüche enthaltend zusätzlich Vinyl(co)polymerisate, Polyalkylenterephthalate oder Mischungen daraus.

5. Zusammensetzungen gemäß einem oder mehreren der vorhergehenden Ansprüche enthaltend zusätzlich ein partikel-, schuppen- oder faserförmiges anorganisches Material.

6. Zusammensetzungen gemäß Anspruch 5 enhaltend als anorganisches Material Talk oder ein nanoskaliges Material mit einem mittleren Partikeldurchmesser ≤ 200 nm.

7. Zusammensetzungen gemäß einem oder mehreren der vorhergehenden Ansprüche enthaltend als Flammschutzmittel eine phosphorhaltige Verbindung der allgemeinen Formel (IV) 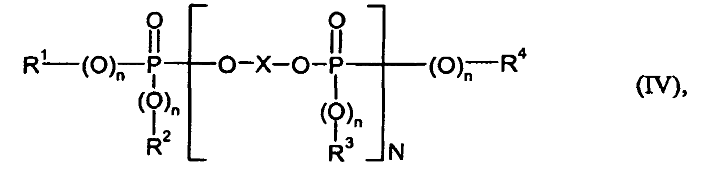 worin
R¹, R², R³ und R⁴, unabhängig voneinander jeweils C₁- bis C₈-Alkyl, jeweils gegebenenfalls durch Alkyl, vorzugsweise C₁-C₄-Alkyl substituiertes C₅- bis C₆-Cycloalkyl, C₆- bis C₂₀-Aryl oder C₇- bis C₁₂-Aralkyl,
n unabhängig voneinander, 0 oder 1
N eine Zahl zwischen 0,5 und 30,
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

8. Zusammensetzungen gemäß einem oder mehreren der vorhergehenden Ansprüche enthaltend als Flammschutzmittel eine phosphorhaltige Verbindung der allgemeinen Formel (V) 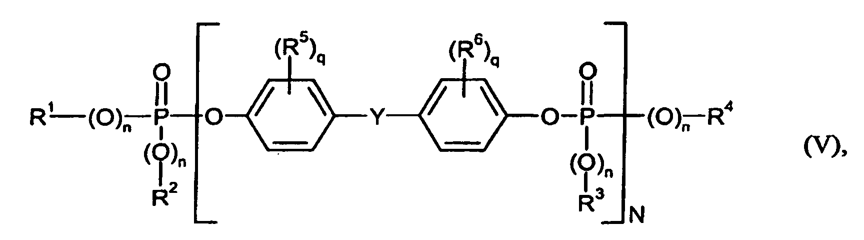 worin
R¹, R², R³ und R⁴ jeweils unabhängig voneinander C₁-C₈-Alkyl und/oder gegebenenfalls durch Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
N eine Zahl zwischen 0,5 und 30,
R⁵ und R⁶ unabhängig voneinander C₁-C₄-Alkyl und
Y C₁-C₇-Alkyliden, C₁-C₇-Alkylen, C₅-C₁₂-Cycloallcylen, C₅-C₁₂-Cycloalkyliden, -O-, -S-, -SO-, SO₂ oder -CO- bedeuten.

9. Zusammensetzungen gemäß einem oder mehreren der vorhergehenden Ansprüche enhaltend als Flammschutzmittel ein Bisphenol-A- oder Resorcinol-basierendes Oligophosphat der Formel 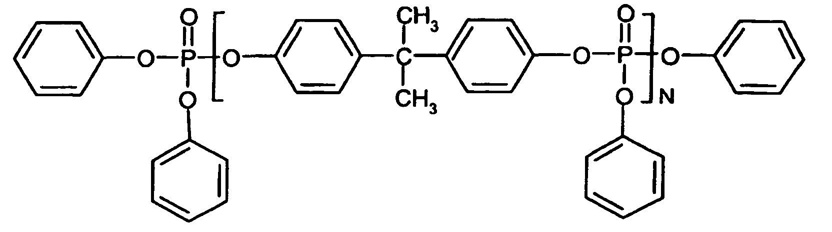 bzw. 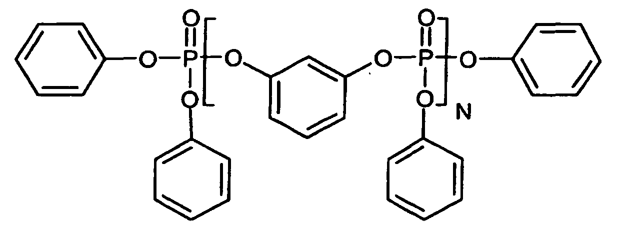 mit N zwischen 0,5 und 10.

10. Zusammensetzungen gemäß einem oder mehreren der vorhergehenden Ansprüche enhaltend als Schlagzähmodifikator ein oder mehrere Pfropfpolymerisate von 5 bis 95 Gew.-% wenigstens eines Vinylmonomeren auf 95 bis 5 Gew.-% mindestens einer Pfropfgrundlage mit einer Glastemperatur < 10°C.

11. Zusammensetzungen gemäß Anspruch 10 mit Pfropfpolymerisaten auf der Grundlage von Dien-, EP(D)M-, Acrylat- oder Silikonkautschuken.

12. Zusammensetzungen gemäß Anspruch 11 enthaltend ein Emulsions- oder Masse-ABS oder Mischungen daraus als Schlagzähmodifikator.

13. Zusammensetzungen gemäß einem der Ansprüche 1 bis 12, in denen der Polyalkylenether ein zahlengemitteltes Molekulargewicht von ≥ 3000 g mol⁻¹ besitzt.

14. Verfahren zur Herstellung der Zusammensetzungen gemäß einem der Ansprüche 1 bis 13, wobei die einzelnen Komponenten gemischt und bei erhöhter Temperatur compoundiert werden.

15. Verwendung der Zusammensetzungen gemäß einem der Ansprüche 1 bis 13 zur Herstellung von Formkörpern bzw. Formteilen jeglicher Art.

16. Formkörper bzw. Formteile erhältlich aus den Zusammensetzungen gemäß einem der Ansprüche 1 bis 13.

## Claims

1. Compositions comprising 40 to 95 parts by wt. of aromatic polycarbonate, 1 to 35 parts by wt. of at least one graft polymer, 1 to 30 parts by wt. of at least one phosphorus-containing flameproofing agent chosen from the substance groups of oligomeric phosphoric acid esters, phosphazenes and phosphonate-amines and 0.1 to 4 parts by wt. of a polyalkylene ether which is optionally modified with agents which form free radicals, which has the structure of a triple-block copolymer of the general formula X-Y-X, wherein X represents polyethylene oxide blocks and Y represents a polypropylene oxide block and the propylene oxide content, based on the polyalkylene ether, is at least 60 wt.%..

2. Compositions according to claim 1, comprising 50 to 90 parts by wt. of aromatic polycarbonate, 2 to 25 parts by wt. of at least one graft polymer, 2 to 20 parts by wt. of at least one phosphorus-containing flameproofing agent chosen from the substance groups of oligomeric phosphoric acid esters, phosphazenes and phosphonate-amines and 0.5 to 3 wt.% of a polyalkylene ether which is optionally modified with agents which form free radicals, which has the structure of a triple-block copolymer of the general formula X-Y-X, wherein X represents polyethylene oxide blocks and Y represents a polypropylene oxide block and the propylene oxide content, based on the polyalkylene ether, is at least 60 wt.%.

3. Compositions according to one or more of the preceding claims, additionally comprising fluorinated polyolefin, optionally as a coagulate, precompound or masterbatch with a graft polymer or a vinyl (co)polymer.

4. Compositions according to one or more of the preceding claims, additionally comprising vinyl (co)polymers, polyalkylene terephthalates or mixtures thereof.

5. Compositions according to one or more of the preceding claims, additionally comprising an inorganic material in the form of particles, flakes or fibres.

6. Compositions according to claim 5, comprising as the inorganic material talc or a nanoscale material with an average particle diameter of ≤ 200 nm.

7. Compositions according to one or more of the preceding claims, comprising as the flameproofing agent a phosphorus-containing compound of the general formula (IV) 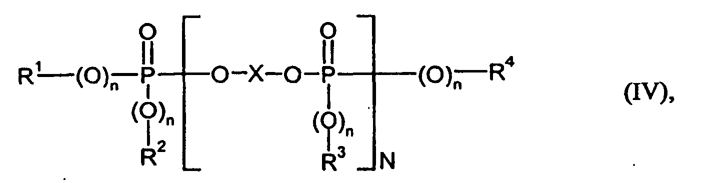 wherein
R¹,R², R³ and R⁴ independently of one another in each case denote C₁- to C₈-alkyl, or C₅- to C₆-cycloalkyl, C₆- to C₂₀-aryl or C₇- to C₁₂-aralkyl, in each case optionally substituted by alkyl, preferably C₁-C₄-alkyl,
n independently of one another, denotes 0 or 1,
N denotes a number between 0.5 and 30 and
X denotes a mono- or polynuclear aromatic radical having 6 to 30 C atoms or a linear or branched aliphatic radical having 2 to 30 C atoms, which can be OH-substituted and can contain up to 8 ether bonds.

8. Compositions according to one or more of the preceding claims, comprising as the flameproofing agent a phosphorus-containing compound of the general formula (V) 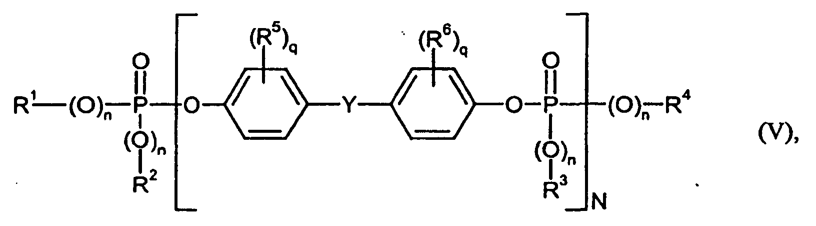 wherein
R¹, R², R³ and R⁴ in each case independently of one another denote C₁-C₈-alkyl and/or optionally alkyl-substituted C₅-C₆-cycloalkyl, C₆-C₁₀-aryl or C₇-C₁₂-aralkyl,
n independently of one another, denotes 0 or 1,
q independently of one another, denotes 0, 1, 2, 3 or 4,
N denotes a number between 0.5 and 30,
R⁵ and R⁶ independently of one another denote C₁-C₄-alkyl and
Y denotes C₁-C₇-alkylidene, C₁-C₇-alkylene, C₅-C₁₂-cycloalkylene, C₅-C₁₂-cycloalkylidene, -O-, -S-, -SO-, SO₂ or -CO-.

9. Compositions according to one or more of the preceding claims, comprising as the flameproofing agent an oligophosphate based on bisphenol A or resorcinol, of the formula 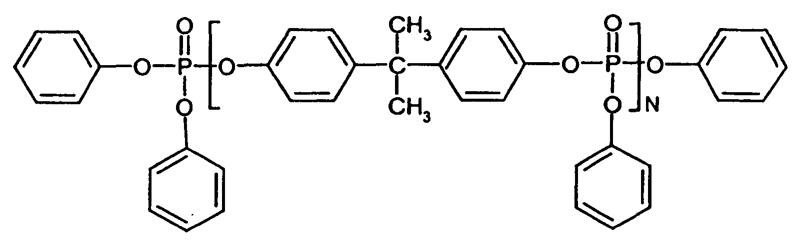 or 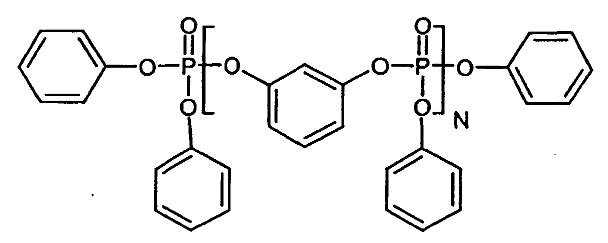 where N is between 0.5 and 10.

10. Compositions according to one or more of the preceding claims, comprising as the impact modifier one or more graft polymers of 5 to 95 wt.% of at least one vinyl monomer on 95 to 5 wt.% of at least one graft base with a glass transition temperature of < 10°C.

11. Compositions according to claim 10 with graft polymers based on diene, EP(D)M, acrylate or silicone rubbers.

12. Compositions according to claim 11, comprising an emulsion or bulk ABS or mixtures thereof as the impact modifier.

13. Compositions according to one of claims 1 to 12, in which the polyalkylene ether has a number-average molecular weight of ≥ 3,000 g mol⁻¹.

14. Process for the preparation of the compositions according to one of claims 1 to 13, wherein the individual components are mixed and the mixture is compounded at elevated temperature.

15. Use of the compositions according to one of claims 1 to 13 for the production of shaped articles or mouldings of all types.

16. Shaped articles or mouldings obtainable from the compositions according to one of claims 1 to 13.

## Revendications

1. Compositions contenant 40 à 95 parties en poids d'un polycarbonate aromatique, 1 à 35 parties en poids d'au moins un polymère greffé, 1 à 30 parties en poids d'au moins un agent ignifugeant phosphoré choisi dans le groupe de substances consistant en les esters phosphoriques oligomères, les phosphazènes et les phosphonatamines et 0,1 à 4 parties en poids d'un éther de polyalkylène éventuellement modifié par des formeurs de radicaux libres, qui a la structure d'un copolymère à trois blocs de formule générale X-Y-X, dans laquelle les symboles X représentent des blocs d'oxyde de polyéthylène et Y un bloc d'oxyde de polypropylène, la fraction oxyde de propylène représentant au moins 60 % du poids des éthers de polyalkylène.

2. Compositions selon la revendication 1, contenant 50 à 90 parties en poids d'un polycarbonate aromatique, 2 à 25 parties en poids d'au moins un polymère greffé, 2 à 20 parties en poids d'au moins un agent ignifigeant phosphoré choisi dans le groupe de substances consistant en les esters phosphoriques oligomères, les phosphazènes et les phosphonatamines, et 0,5 à 3 % en poids d'un éther de polalkylène éventuellement modifié par des formeurs de radicaux libres, qui a la structure d'un copolymère à trois blocs de formule générale X-Y-X dans laquelle les symboles X représentent des blocs d'oxyde de polyéthylène et Y un bloc d'oxyde de polypropylène, la fraction oxyde de propylène représentant au moins 60 % du poids des éthers de polyalkylène.

3. Compositions selon une ou plusieurs des revendications qui précèdent, contenant en outre une polyoléfine fluorée, le cas échéant à l'état de coagulat, de prémélange ou de mélange-maître avec un polymère greffé ou un (co)polymère vinylique.

4. Compositions selon une ou plusieurs des revendications qui précèdent, contenant en outre des (co)polymères vinyliques, des téréphtalates de polyalkylène ou leurs mélanges.

5. Compositions selon une ou plusieurs des revendications qui précèdent contenant en outre une matière minérale en particules, en écailles, ou à l'état de fibres.

6. Compositions selon revendication 5 contenant en tant que matière minérale du talc ou une matière à l'échelle nanométrique, à un diamètre de particule moyen ≤ 200 nm.

7. Compositions selon une ou plusieurs des revendications qui précèdent, contenant en tant qu'agent ignifugeant un composé phosphoré de formule générale (IV) 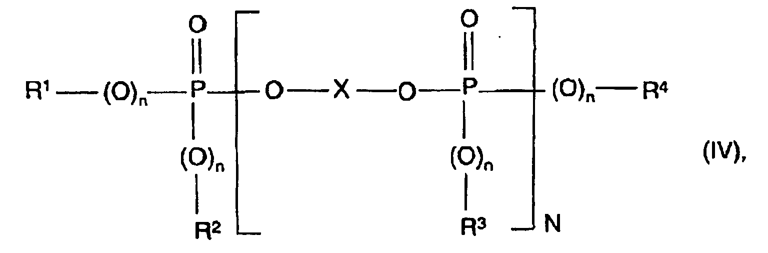 dans laquelle
R¹, R², R³ et R⁴ représentent chacun, indépendamment les uns des autres, un groupe alkyle en C₁-C₈, un groupe cycloalkyle en C₅-C₆, aryle en C₆-C₂₀ ou aralkyle en C₇-C₁₂ éventuellement substitué par des groupes alkyles, de préférence des groupes alkyles en C₁-C₄,
les indices n sont égaux chacun, indépendamment les uns des autres, à 0 ou 1
N représente un nombre allant de 0,5 à 30,
X représente un radical aromatique mono- ou poly-cyclique en C₆-C₃₀ ou un radical aliphatique linéaire ou ramifié en C₂-C₃₀, qui peut porter des substituants OH et peut contenir jusqu'à 8 liaisons éther.

8. Compositions selon une ou plusieurs des revendications qui précèdent, contenant en tant qu'agent ignifugeant un composé phosphoré de formule générale (V) 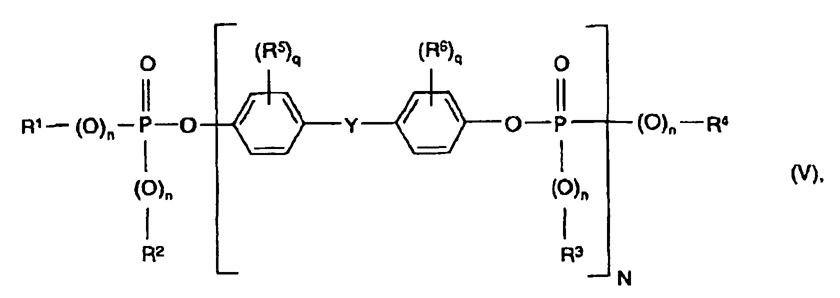 dans laquelle
R¹, R², R³ et R⁴ représentent chacun, indépendamment les uns des autres, un groupe alkyle en C₁-C₈ et/ou un groupe cycloalkyle en C₅-C₆, aryle en C₆-C₁₀ ou aralkyle en C₇-C₁₂ éventuellement substitué par des groupes alkyles,
les indices n sont égaux chacun, indépendamment les uns des autres, à 0 ou 1,
les indices q sont égaux chacun, indépendamment l'un de l'autre, à 0, 1, 2, 3 ou 4,
N est un nombre allant de 0,5 à 30,
R⁵ et R⁶ représentent chacun, indépendamment l'un de l'autre, un groupe alkyle en C₁-C₄ et
Y représente un groupe alkylidène en C₁-C₇, alkylène en C₁-C₇, cydoalkylène en C₅-C₁₂, cycloalkylidène en C₅-C₁₂, -O-, -S-, -SO-, SO₂ ou -CO-.

9. Compositions selon une ou plusieurs des revendications qul précèdent, contenant en tant qu'agent ignifugeant un oligophosphate à base du bisphénol A ou du résorcinol, de formules respectives 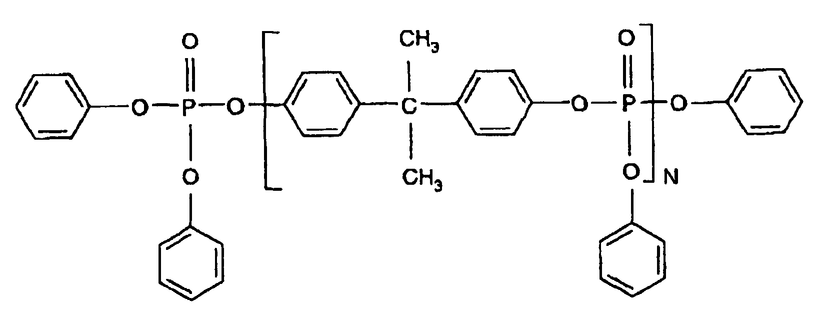 et 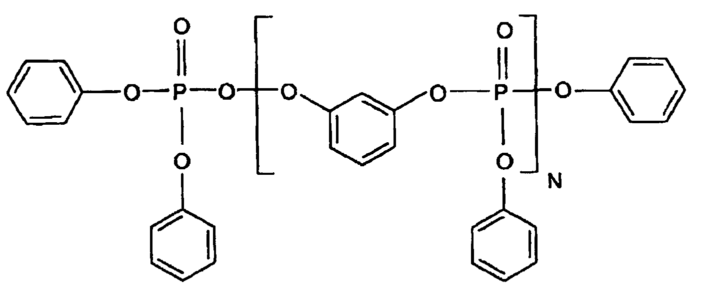 dans lesquelles N est un nombre allant de 0,5 à 10.

10. Compositions selon une ou plusieurs des revendications qui précèdent contenant en tant qu'agents modiflants apportant la résistance au choc un ou plusieurs polymères greffés de 5 à 95 % en poids d'au moins un monomère vinylique sur 95 à 5 % en poids d'au moins un support de greffage ayant une température de transition du second ordre inférieure à 10°C.

11. Compositions selon revendication 10 contenant des polymères greffés à base de caoutchoucs diéniques, EP(D)M, d'acrylates ou de silicones.

12. Compositions selon revendication 11 contenant un polymère ABS préparé en émulsion ou en masse ou un mélange de tels polymères en tant qu'agent modifiant apportant la résistance au choc.

13. Compositions selon une ou plusieurs des revendications 1 à 12, dans lesquelles les éthers de polyalkylène ont un poids moléculaire moyen, moyenne en nombre ≥ 3 000 g/mol.

14. Procédé pour la préparation des compositions selon une des revendications 1 à 13, selon lequel on mélange les composants individuels et on homogénéise à température élevée.

15. Utilisation de compositions selon une des revendications 1 à 13 pour la fabrication de corps moulés ou de pièces moulées de tous types.

16. Corps moulés ou pièces moulées obtenus à partir des compositions selon l'une des revendications 1 à 13.
